# EUROPÄISCHE PATENTSCHRIFT

(11) **EP 3 629 694 B1**
(45) Veröffentlichungstag und Bekanntmachung des Hinweises auf die Patenterteilung: **31.03.2021**
(21) Anmeldenummer: 18726049.2
(22) Anmeldetag: 08.05.2018
(51) Int. Cl.: A01C 21/00, A01C 15/04, A01C 7/12, A01C 19/02

(54) **LANDWIRTSCHAFTLICHE MASCHINE ZUM AUSBRINGEN VON VERTEILGUT UND DOSIERORGAN FÜR DIESELBE**
AGRICULTURAL MACHINE FOR DISPENSING MATERIAL TO BE DISTRIBUTED AND METERING ELEMENT FOR SAID AGRICULTURAL MACHINE
MACHINE AGRICOLE POUR L'ÉPANDAGE D'UN PRODUIT À RÉPARTIR ET ORGANE DE DOSAGE POUR CELLE-CI

(30) Priorität: 29.05.2017 DE 102017005094
(43) Veröffentlichungstag der Anmeldung: 08.04.2020
(73) Patentinhaber: RAUCH Landmaschinenfabrik GmbH, 76547 Sinzheim (DE)
(72) Erfinder: STÖCKLIN, Volker, 77975 Ringsheim (DE)
(74) Vertreter: Lichti - Patentanwälte Partnerschaft mbB
(86) Internationale Anmeldenummer: PCT/EP2018/000244
(87) Internationale Veröffentlichungsnummer: WO 2018/219489

(56) Entgegenhaltungen:
- DE-A1- 3 616 538
- US-A1- 2017 055 435
- US-B2- 9 144 190

## Beschreibung

Die Erfindung betrifft ein Dosierorgan mit einer in einem Dosiergehäuse gelagerten, rotierbar angetriebenen Dosierwalze, welches zum Einsatz in einer landwirtschaftlichen Maschine zum Ausbringen von Verteilgut geeignet ist, wobei die Dosierwalze eine Mehrzahl an auf einem sich koaxial zu deren Drehachse erstreckenden Hohlkörper gelagerten Dosierradsegmenten aufweist und einem jeweiligen Dosierradsegment der Dosierwalze ein eigener Antrieb zugeordnet ist, um die Dosierradsegmente unabhängig voneinander anzutreiben. Die Erfindung bezieht sich ferner auf eine landwirtschaftliche Maschine zum Ausbringen von Verteilgut, insbesondere Dünger und/oder Saatgut, mit wenigstens einem Dosierorgan der vorgenannten Art.

Landwirtschaftliche Maschinen, deren Dosierorgane drehangetriebene Dosierwalzen umfassen, sind insbesondere in Form von Düngerstreuern und/oder Sämaschinen zum Ausbringen von pulver- bzw. partikelförmigem Verteilgut, wie Dünger, Saatgut und dergleichen, in vielfältiger Ausgestaltung bekannt und umfassen üblicherweise einen Vorratsbehälter zur Aufnahme des Verteilgutes, unterhalb dessen das oder die Dosierorgan(e) angeordnet ist bzw. sind. Während als Dosierorgane häufig auch mit einer Auslauföffnung des Vorratsbehälters zusammenwirkende, aktuatorisch oder manuell betätigte Dosierschieber zum Einsatz gelangen, weist das Dosierorgan bei den hier in Frage stehenden landwirtschaftlichen Maschinen einer rotierbar angetriebene Dosierwalze auf, welche insbesondere in Form einer Zellenrad- und/oder Nockenradwalze ausgestaltet sein kann. Die Dosierwalze ist in einem Dosiergehäuse gelagert, welches üblicherweise einen an seiner Oberseite angeordneten, beispielsweise mit dem Vorratsbehälter in Verbindung stehenden Einlass und eine an seiner Unterseite angeordneten Auslass aufweist. Ein solches Dosierorgan ist beispielsweise aus der EP 2 786 649 A2 bekannt.

Landwirtschaftliche Maschinen, welche von Dosierwalzen umfassenden Dosierorganen Gebrauch machen, können im einfachsten Fall beispielsweise von sogenannten Kastenstreuern bzw. Kastensämaschinen gebildet sein, bei welchen das in einem Vorratsbehälter auf Vorrat gehaltene und mittels der Dosierwalze des Dosierorgans dosierte Verteilgut rein aufgrund Schwerkraft entweder über eine oder mehrere, z.B. am Ende von sich bis oberhalb des Bodens erstreckenden Schläuchen vorgesehenen, Ablageöffnungen auf die Oberfläche des Bodens ausgebracht oder, z.B. mittels geeigneter Injektionseinrichtungen, Säzinken, Säscharen und dergleichen, in den Boden eingebracht wird. Solche Kastenstreuer bzw. Kastensämaschinen, welche in der Regel als Nachläufer oder als Anbaugeräte für Zugmaschinen, wie Traktoren, konzipiert sind, dienen vornehmlich zum Ausbringen des Verteilgutes entlang relativ schmaler Flächen, wie beispielsweise im Gemüseanbau zum Verteilen von Dünger auf verhältnismäßig schmale Beetflächen. Ihre Arbeitsbreite, welche weitestgehend der Streubreite entspricht, beträgt oft in der Größenordnung von beispielsweise etwa 80 cm bis etwa 3 m. Sofern das Verteilgut nur auf eine Teilbreite ausgebracht werden soll, wie es z.B. beim Ausbringen des Verteilgutes an einem Feld- oder Beetrand erforderlich sein kann, können die nicht benötigten Axialabschnitte der Dosierwalze, welche je nach dem auszubringenden Verteilgut z.B. als Zellenrad- oder Nockenwalze ausgestaltet und vorteilhafterweise entweder gänzlich austauschbar oder aus einzelnen, gegeneinander austauschbaren Zellenrad- oder Nockenradsegmenten zusammengesetzt sein kann (vgl. z.B. die oben zitierte 2 786 649 B1), mit die Zellenradkammern bzw. die Nockentäler überdeckenden Blindringen versehen werden, was sich jedoch in handhabungstechnischer Hinsicht als aufwändig und mühsam erweisen kann.

Ferner finden Dosierorgane mit einer in einem Dosiergehäuse gelagerten, rotierbar angetriebenen Dosierwalze insbesondere in pneumatischen Verteilmaschinen Verwendung, welche gleichfalls als pneumatische Düngerstreuer und/oder pneumatische Sämaschinen ausgestaltet sein können. Pneumatische Verteilmaschinen können gleichfalls einerseits in leichter Bauart als Anbaugeräte verwirklicht sein, welche mit dem Dreipunkt einer Zugmaschine, wie eines Traktors, gekoppelt werden können, anderseits können sie in schwerer Bauart auf einen achsgestützten Nachläufer oder einen Selbstfahrer aufgesetzt sein. Sie umfassen üblicherweise eine Mehrzahl an seitlich nach außen ragenden Auslegern, welche in unterschiedlichem Abstand voneinander endende Förderleitungen aufnehmen. Zur Förderung des Verteilgutes dient ein Gebläse, dessen Druckleitung sich an einen Auslass des Dosiergehäuses eines jeweiligen Dosierorgans anschließt und in einem Druckverteiler mündet, an welchen sich die Förderleitungen anschließen. Zwischen dem Druckverteiler und den Förderleitungen angeordnete Übergabekammern, welche zweckmäßigerweise mit jeweils eine Düse und einen Diffusor umfassenden Injektoren ausgestattet sein können, dienen zur Übergabe des Streugutes von der Dosierwalze des Dosierorgans an die Förderleitungen, um sicherzustellen, dass jeder Förderleitung dieselbe Menge an Verteilgut aufgegeben wird. Das Verteilgut wird schließlich pneumatisch über die nach außen umgelenkten Förderleitungen bis zu deren Ende gefördert, wo das Streugut an entsprechende Verteilorgane überführt wird.

Je nach Ausgestaltung der landwirtschaftlichen Maschine zum Ausbringen von Verteilgut bzw. je nach Art des auszubringenden Verteilgutes können die Verteilorgane im einfachsten Fall z.B. Ablageöffnungen aufweisen, aus welchen das Verteilgut infolge Schwerkraft mehr oder minder linienförmig auf der Oberfläche des Bodens ausgebracht wird, wie es beispielsweise für die Reihendüngung erwünscht sein kann. Die Ablageöffnungen können dabei z.B. unmittelbar unterhalb des Dosierorgans oder auch am Ende von Schlauchleitungen vorgesehen sein, welche sich stromab des Dosierorgans bis unmittelbar oberhalb des Bodens erstrecken, damit das Verteilgut keinen Windeinflüssen unterliegt, wenn es zu Boden fällt. Ferner können insbesondere im Falle von pneumatischen Verteilmaschinen der oben genannten Art als Verteilorgane Prallteller bzw. Prallplatten vorgesehen sein, auf welche das in einer jeweiligen Förderleitung pneumatisch transportierte Verteilgut auftrifft und von dort im Wesentlichen fächerförmig auf dem Boden abgelegt wird. Andersartige Verteilorgane, wie sie insbesondere zur Verteilung von Saatgut, aber auch für die Tiefendüngung zum Einsatz gelangen, umfassen Injektionseinrichtungen zum Einbringen des Verteilgutes in den Boden, wie sie beispielsweise aus der WO 2015/120982 A1 bekannt sind, um das Verteilgut in eine Bodenfurche einzubringen und die Bodenfurche vorzugsweise mittels nachgeordneter Schlitzverschlusseinrichtungen, wie sogenannten Striegeln oder dergleichen, wieder zu verschließen. Darüber hinaus sind als Verteilorgane auch Säscharen oder Säzinken geläufig, welche gleichfalls einen Schlitz in dem Boden erzeugen, in welchen das Verteilgut abgelegt werden kann.

Eine derartige pneumatische Verteilmaschine ist in Form eines pneumatischen Düngerstreuers beispielsweise aus der DE 10 2004 030 240 A1 bekannt, welche hiermit ausdrücklich zum Gegenstand der vorliegenden Offenbarung gemacht wird. Die bekannte pneumatische Verteilmaschine weist dabei eine Mehrzahl an Dosierorganen auf, welche jeweils eine drehangetriebene Dosierwalze umfassen, an deren Dosiergehäuse sich auslassseitig wiederum mehrere, mittels Gebläse druckbeaufschlagte Übergabekammern anschließen, von welchen gruppenweise mehrere Förderleitungen abgehen, welche in je einem Verteilorgan münden. Eine Teilbreitenschaltung ist dadurch gewährleistet, dass jedem Dosierorgan ein eigener, unabhängig voneinander drehzahlgesteuerter Motor zum Antrieb seiner jeweiligen Dosierwalze zugeordnet ist, so dass nebeneinander angeordnete Verteilorgane, welche von den jeweiligen Gruppen an Förderleitungen mit Verteilgut versorgt sind, die von einem jeweiligen Dosierorgan ausgehen, gruppenweise zu- bzw. abgeschaltet werden können. Ferner lassen sich durch sukzessives Einschalten bzw. Ausschalten der Dosierorgane derart, dass zunächst die mit den äußeren Verteilorganen in Verbindung stehenden Dosierorgane eingeschaltet werden und sodann erst die weiter inneren bzw. dass zunächst die mit den inneren Verteilorganen in Verbindung stehenden Dosierorgane abgeschaltet werden und sodann erst die weiter äußeren, die zum pneumatischen Transport des Verteilgutes durch die verschieden langen Förderleitungen erforderlichen unterschiedlichen Transportzeiten kompensieren, so dass der Verteilvorgang am Anfang des Feldes gleichmäßig begonnen bzw. am Ende des Feldes gleichmäßig beendet werden kann. Darüber hinaus ist es durch Antrieb der Dosierwalzen der Dosierorgane mit unterschiedlichen Rotationsgeschwindigkeiten auch möglich, verschiedenen Feldbereichen mit unterschiedlichem Versorgungsbedarf an Verteilgut innerhalb der gesamten Arbeitsbreite Rechnung zu tragen oder bei der Kurvenfahrt andernfalls im Kurveninneren entstehende Überversorgungen bzw. im Kurvenäußeren entstehende Unterversorgungen zu kompensieren.

Indes lässt sich auf diese Weise eine nur relativ grobe Teilbreitenschaltung realisieren, da die unabhängig voneinander drehangetrieben Dosierorgane jeweils mit Gruppen von Verteilorganen kommunizieren, aber die Zuordnung eines eigenen Dosierorgans einem jeweiligen Verteilorgan aus Platzgründen praktisch nicht möglich, geschweige denn wirtschaftlich wäre. Um innerhalb einer Teilbreite einzelne Verteilorgane abschalten zu können, wie es beispielsweise beim Ausbringen von Verteilgut im Bereich des Feldrandes in Bezug auf die äußeren Verteilorgane erforderlich sein kann, bleibt folglich auch bei pneumatischen Verteilmaschinen in der Regel nichts anderes übrig, als die mit den nicht benötigten Verteilorganen über eine jeweilige Übergabekammer in Verbindung stehenden Axialabschnitte der Dosierwalze, welche je nach dem auszubringenden Verteilgut wiederum z.B. als Zellenrad- oder Nockenwalze ausgestaltet und vorteilhafterweise entweder gänzlich austauschbar oder aus einzelnen, gegeneinander austauschbaren Zellenrad- oder Nockenradsegmenten zusammengesetzt sein kann (vgl. z.B. die oben zitierte 2 786 649 B1), mit die Zellenradkammern bzw. die Nockentäler überdeckenden Blindringen zu versehen.

Die EP 2 329 703 B2 beschreibt ein insbesondere für landwirtschaftliche Sämaschinen vorgesehenes Dosierorgan, welches eine Dosierwalze mit mehreren Dosierradsegmenten aufweist. Zum rotatorischen Antrieb der Dosierradsegmente unabhängig voneinander sind die Dosierradsegmente an ihrem radialen Innenumfang mit einem Kupplungsmechanismus, z.B. in Form eines Mehrkantprofils, ausgestattet, welches wahlweise mit einer zentralen Antriebswelle der Dosierradsegmente koppelbar bzw. entkoppelbar ist. Auf diese Weise lassen sich zwar einzelne, nicht benötigte Dosierradsegmente stillsetzen, doch ist ein Drehantrieb verschiedener Dosierradsegmente mit unterschiedlichen Drehgeschwindigkeiten, wie es beispielsweise bei der Kurvenfahrt oder bei der Überfahrt von Bodenflächen mit unterschiedlichem Verteilgutbedarf wünschenswert wäre, nicht möglich. Entsprechendes gilt weitgehend für das aus der EP 0 927 511 A1 bekannte Dosierorgan einer Sämaschine, welches eine Dosierwalze mit einer Mehrzahl an unterschiedlichen Dosierradsegmenten aufweist, welche zwecks Zu- bzw. Abschaltung ihres Rotationsantriebs unabhängig voneinander mittels Kupplungselementen mit einer zentralen Antriebswelle koppelbar bzw. von dieser entkoppelbar sind.

Der AT 14 771 U1 ist eine Sämaschine mit einem wiederum von einer Dosierwalze gebildeten Dosierorgan zu entnehmen, welches zwei koaxiale Dosierradsegmente umfasst, wobei die beiden Dosierradsegmente jeweils eine Mehrzahl an Zellenräder mit zwischen diesen angeordneten Vollscheiben umfassen und jeweils einen eigenen Antrieb in Form zweier getrennt voneinander regelbaren Elektromotoren aufweisen. Die Kraftkupplung zwischen einem jeweiligen Elektromotor und einem jeweiligen Dosierradsegment erfolgt dabei einerseits durch eine Hohlwelle, welche den einen Motor mit dem drehfest auf der Hohlwelle sitzenden einen Dosierradsegment verbindet, andererseits durch eine koaxial zu der Hohlwelle angeordnete Kernwelle, welche den anderen Motor mit dem drehfest auf der Kernwelle sitzenden anderen Dosierradsegment verbindet. Auf diese Weise ist zwar ein unabhängiger Antrieb beider Dosierradsegmente mit praktisch beliebigen Drehzahlen möglich, doch erweist sich der Antrieb in konstruktiver Hinsicht als aufwändig und erfordert einen hohen, bei gattungsgemäßen Verteilmaschinen üblicherweise nur sehr begrenzt zur Verfügung stehenden Bauraum, wobei insbesondere ein unabhängiger Antrieb von maximal zwei Dosierradsegmenten möglich ist, so dass eine nur sehr grobe Teilbreitenschaltung mit zwei Teilbreiten erreicht werden kann.

Die US 9 144 190 B2 beschreibt ein Dosierorgan für eine landwirtschaftliche Maschine in Form einer Drillmaschine, deren Dosierwalze eine Mehrzahl an Dosierradsegmenten aufweist, welche von einer Mehrzahl an mit einer Steuereinrichtung in Wirkverbindung stehenden Antrieben unabhängig voneinander drehangetrieben sind. Die Antriebe sind - in Axialrichtung betrachtet - jeweils zwischen zwei benachbarten Dosierradsegmenten angeordnet, was mit einem in konstruktiver Hinsicht relativ aufwändigen Aufbau einhergeht, welcher einen verhältnismäßig großen Bauraum erfordert.

Der Erfindung liegt die Aufgabe zugrunde, eine landwirtschaftliche Maschine zum Ausbringen von Verteilgut der eingangs genannten Art sowie ein für eine solche landwirtschaftliche Maschine geeignetes Dosierorgan mit einer in einem Dosiergehäuse gelagerten, rotierbar angetriebenen Dosierwalze unter zumindest weitestgehender Vermeidung der vorgenannten Nachteile dahingehend weiterzubilden, dass eine gegenüber dem Stand der Technik genauere Dosierung sowie insbesondere eine individuelle Dosierung des Verteilgutes innerhalb kleiner Teilbreiten der landwirtschaftlichen Maschine bei einem kompakten Aufbau des Dosierorgans ermöglicht wird.

Erfindungsgemäß wird diese Aufgabe bei einem Dosierorgan sowie bei einer mit wenigstens einem solchen Dosierorgan versehenen landwirtschaftlichen Maschine der eingangs genannten Art dadurch gelöst, dass die Antriebe der Dosierradsegmente der Dosierwalze im Innern der Dosierradsegmente angeordnet sind, wobei die Antriebe der Dosierradsegmente der Dosierwalze im Innern des die Dosierradsegmente lagernden Hohlkörpers festgelegt sind und jeweils ein einem jeweiligen Dosierradsegment zugeordnetes Zahnrad aufweisen, die Mantelfläche des Hohlkörpers zumindest an ihrem einem jeweiligen Zahnrad zugeordneten Axialabschnitt eine Durchgangsöffnung aufweist und ein jeweiliges Zahnrad mit einer jeweiligen Innenverzahnung eines jeweiligen Dosierradsegmentes im Eingriff steht.

Die erfindungsgemäße Ausgestaltung der Dosierwalze des Dosierorgans ermöglicht bei einem äußerst kompakten Aufbau eine individuelle Dosierung des Verteilgutes entlang der einzelnen, von einem jeweiligen Dosierradsegment gebildeten Axialabschnitte der Dosierwalze, indem die Dosierradsegmente mittels ihres jeweiligen Antriebs unabhängig voneinander rotierbar angetrieben sind. Einzelne Dosierradsegmente können folglich abgeschaltet werden, so dass dort keine Dosierung stattfindet, während andere Dosierradsegmente mit der dem gewünschten Massenstrom an Verteilgut entsprechenden Drehzahl drehangetrieben werden können, um das Verteilgut nur dort auszubringen, wo es gewünscht ist.

Darüber hinaus ist es aufgrund der den Dosierradsegmenten der Dosierwalze zugeordneten individuellen Antrieben möglich, dass die einzelnen Dosierradsemente nicht nur entweder mit der gewünschten Drehzahl angetrieben oder stillsetzbar sind, sondern insbesondere auch mit praktisch beliebigen unterschiedlichen Drehzahlen angetrieben werden können, um jede mit einem jeweiligen Dosierradsegment der Dosierwalze korrespondiere Teilbreite mit dem individuell gewünschten Massenstrom an Verteilgut zu versorgen. Auf diese Weise lassen sich innerhalb fein unterteilter Teilbreiten über die Arbeitsbreite der landwirtschaftlichen Maschine jeweils die erforderliche Verteilmengen exakt dosieren, so dass insbesondere eine Verteilung des Verteilgutes in Abhängigkeit von der jeweiligen Position der landwirtschaftlichen Maschine auf dem Feld gemäß vorgegebener Applikationskarten mit sehr hoher Genauigkeit möglich wird. Die Positionserfassung der landwirtschaftlichen Maschine kann dabei mittels bekannter, in der Regel satellitengestützter Positionserfassungssysteme, wie GPS oder dergleichen, geschehen, wie sie bei modernen landwirtschaftlichen Verteilmaschinen inzwischen zum Stand der Technik gehören. Zudem ist es selbstverständlich möglich, durch Verlangsamen bzw. Beschleunigen einzelner Dosierradsegmente der Dosierwalze bei der Kurvenfahrt der landwirtschaftlichen Maschine derart, dass einem jeweiligen Dosierradsegment zugeordnete und unter verschiedenen seitlichen Abständen in Bezug auf die Fahrtrichtung der landwirtschaftlichen Maschine angeordnete Verteilorgane im Kurveninnern mit von innen nach außen abnehmenden Massenströmen an Verteilgut und im Kurvenäußeren mit von innen von außen zunehmenden Massenströmen an Verteilgut versorgt werden, die bei der Kurvenfahrt andernfalls verursachten kurveninnenseitigen Überversorgungen bzw. die kurvenaußenseitigen Unterversorgungen des Bodens mit dem Verteilgut zu kompensieren, wie es als solches aus der eingangs erwähnten DE 10 2004 030 240 A1 für der Dosierwalze einem jeweiligen Dosierorgan zugeordnete Gruppen an Verteilorganen bekannt ist. Zudem ist es selbstverständlich möglich, durch sukzessives Zuschalten bzw. Abschalten der einzelnen Dosierradsegmente derart, dass einem jeweiligen Dosierradsegment zugeordnete und unter verschiedenen seitlichen Abständen in Bezug auf die Fahrtrichtung der landwirtschaftlichen Maschine angeordnete Verteilorgane von außen nach innen eingeschaltet bzw. von innen nach außen abgeschaltet werden, verschiedene Längen der die Verteilorgane mit Verteilgut versorgenden Förderleitungen zu kompensieren, wie es als solches ebenfalls aus der eingangs erwähnten DE 10 2004 030 240 A1 für der Dosierwalze einem jeweiligen Dosierorgan zugeordnete Gruppen an Verteilorganen bekannt ist.

Es ergibt sich folglich eine sehr feine Unterteilung an möglichen Teilbreiten, wobei ein jedes Dosierradsegment eine Teilbreite der gesamten Arbeitsbreite der landwirtschaftlichen Maschine zu versorgen vermag. Das erfindungsgemäße Dosierorgan bietet sich dabei insbesondere für alle bekannten landwirtschaftlichen Maschinen an, welche zum Ausbringen von pulver- oder partikelförmigen Verteilgütern, wie insbesondere Dünger und/oder Saatgut, dienen, seien sie beispielsweise von relativ einfach aufgebauten, sogenannten Kastenstreuern oder Kastensämaschinen gebildet, bei welchen das Verteilgut stromab der einzelnen Dosierradsegmente der Dosierwalze auf den Boden fällt, oder seien sie beispielsweise von demgegenüber komplexeren pneumatischen Verteilmaschinen gebildet, bei welchen das Verteilgut stromab der einzelnen Dosierradsegmente der Dosierwalze an verschiedenartige Verteilorgane überführt werden kann, welche in unterschiedlichen Seitenabständen in Bezug auf die Fahrtrichtung angeordnet sind.

Die Antriebe der Dosierradsegmente der Dosierwalze sind dabei erfindungsgemäß im Innern der Dosierradsegmente angeordnet. Auf diese Weise ergibt sich einerseits ein äußerst kompakter Gesamtaufbau des Dosierorgans, indem das zur Verfügung stehende Innenvolumen der Dosierwalze optimal ausgenutzt wird, andererseits ist der oder sind die Antriebe in idealer Weise vor äußeren Einwirkungen geschützt innerhalb der Mantelflächen der Dosierradsegmente der Dosierwalze untergebracht, welche folglich eine Art "Schutzgehäuse" bilden.

Die Dosierradsegmente der Dosierwalze können im Übrigen je nach auszubringendem Verteilgut, wie verschiedenen Saatgütern einschließlich Feinsaat und/oder verschiedenen Düngemitteln, zweckmäßigerweise von Nockenradsegmenten und/oder Zellenradsegmenten gebildet sein, wobei selbstverständlich auch Dosierradsegmente mit beliebigen bekannten andersartigen Dosierstrukturen zum Einsatz gelangen können, wie beispielsweise solche nach Art von Zellenradsegment-, Loch-, Nutenwalzen oder dergleichen. Ferner können selbstverständlich verschiedenartige Dosierradsegmente miteinander kombiniert werden, um mit ein und derselben Dosierwalze unterschiedliche Verteilgutmengen und/oder -sorten ausbringen zu können.

In konstruktiver Hinsicht sind die Dosierradsegmente der Dosierwalze erfindungsgemäß auf dem sich koaxial zu deren Drehachse erstreckenden Hohlkörper gelagert, welcher zweckmäßigerweise stationär in dem Dosiergehäuse angeordnet sein kann. Als Lager für die Dosierradsegmente kommen sowohl Wälz- oder Gleitlager in Betracht, wobei sich letztere im Hinblick auf einen sehr geringen Bauraum als vorteilhaft erweisen können. Der als Lagerkörper für die Dosierradsegmente der Dosierwalze dienende Hohlkörper ist zweckmäßigerweise im Wesentlichen rohrförmig ausgestaltet und weist eine kreiszylindrische Mantelfläche auf, welche sich um zumindest einen Teil seines Außenumfangs erstreckt. Der Hohlkörper kann dabei einen im Wesentlichen C- bzw. U-förmigen Querschnitt und/oder einen Kreisquerschnitt besitzen, wobei es hinsichtlich einer hohen Formstabilität von Vorteil sein kann, wenn er zumindest an seinen Axialabschnitten, an welchen die Dosierradsegmente gelagert sind, einen vollumfänglichen Kreisquerschnitt aufweist. Die Antriebe der Dosierradsegmente sind dabei im Innern des die Dosierradsegmente lagernden Hohlkörpers festgelegt, wie beispielsweise an innenseitig des Hohlkörpers vorgesehenen Tragflanschen, an welchen die Antriebe zweckmäßigerweise lösbar befestigbar sind. Zur Übertragung der mittels der Antriebe induzierten Drehbewegung auf die einzelnen Dosierradsegmente weisen die Antriebe jeweils ein einem jeweiligen Dosierradsegment zugeordnetes Zahnrad auf, während der Hohlkörper zumindest an seinem einem jeweiligen Zahnrad zugeordneten Axialabschnitt eine Durchgangsöffnung aufweist, wobei ein jeweiliges Zahnrad mit einer jeweiligen Innenverzahnung eines jeweiligen Dosierradsegmentes im Eingriff steht. Um einem jeden Dosierradsegment einen eigenen Antrieb zuzuordnen und auf diese Weise einen Drehantrieb aller Dosierradsegmente mit verschiedenen Drehgeschwindigkeiten unabhängig voneinander zu gewährleisten, kann z.B. ein abtriebsseitiges Zahnrad eines jeden Antriebs permanent mit der Innenverzahnung eines jeweiligen Dosierradsegmentes im Eingriff stehen, wobei die das Zahnrad tragende Welle zweckmäßigerweise exzentrisch in Bezug auf die Mittelachse des insbesondere etwa kreiszylindrischen Hohlkörpers angeordnet sein kann, dessen Mantelfläche ihrerseits im Bereich des Zahnrades eine Durchgangsöffnung aufweist bzw. sich dort nur um einen Teil des Gesamtumfangs erstreckt, welcher folglich zumindest bereichsweise etwa C- oder U-förmig ausgestaltet sein kann.

Die Antriebe der Dosierradsegmente der Dosierwalze können vorzugsweise Elektromotoren oder Hydraulikmotoren umfassen, wobei der motorische Antrieb der Dosierradsegmente in beiden Fällen insbesondere Getriebemotoren aufweisen kann. Im Falle von Elektromotoren bieten sich z.B. vorteilhafterweise Servomotoren an.

Die erfindungsgemäße Ausgestaltung der unabhängig voneinander drehangetriebenen Dosierradsegmente der Dosierwalze mittels im Innern derselben angeordneter Antriebe bietet dabei insbesondere die Möglichkeit, dass die Dosierwalze des Dosierorgans nicht nur zwei, sondern wenigstens drei, vorzugsweise mehr als drei, unabhängig voneinander angetriebene Dosierradsegmente aufweist, welche vorzugsweise sämtlich mittels jeweils eines eigenen Antriebs unabhängig voneinander drehangetrieben sind.

Die Dosierradsegmente der Dosierwalze können an ihren einander zugewandten Stirnseiten vorzugsweise mittels Gleitringdichtungen, insbesondere in Form von Labyrinthdichtungen, gegeneinander abgedichtet sein, um ein Eindringen von Verteilgut in die Zwischenräume zwischen den Dosierradsegmenten zu verhindern sowie insbesondere auch im Innern des Hohlkörpers aufgenommene Funktionsteile, wie insbesondere den oder die Antriebe der Dosierradsegmente oder Teile derselben, vor eindringendem Schmutz und Feuchtigkeit zu bewahren.

Um die Dosierradsegmente der Dosierwalze an verschiedenartige Verteilgüter anpassen zu können, können die Dosierradsegmente vorteilhafterweise austauschbar auf dem Hohlkörper gelagert sein, wobei die Dosierradsegmente insbesondere
- in Axialrichtung auf den Hohlkörper aufschiebbar sind; und/oder
- mehrteilig in Form von lösbar aneinander befestigbaren, im Wesentlichen kreisbogenförmigen Dosierradsegmentabschnitten ausgebildet sind.
Im erstgenannten Fall können die Dosierradsegmente beispielsweise auf die äußeren Lagerschalen der zu ihrer Lagerung auf dem Hohlkörper dienenden Gleit- oder Wälzlager aufschiebbar sein, wobei der Hohlkörper vorzugsweise im Bereich wenigstens eines seiner Enden mit einem als Anschlag für ein endständiges Dosierradsegment dienenden - lösbaren oder stationären - Umfangsvorsprung versehen sein kann, während sein entgegengesetzten Ende beispielsweise mit einem als Anschlag für das entgegengesetzte endständige Dosierradsegment dienenden, lösbaren Haltering versehen sein kann, um die Dosierradsegmente sicher und zuverlässig axialfest, aber drehbar, lösbar an dem Hohlkörper zu befestigen. Alternativ können freilich auch zwei lösbare Halteringe vorgesehen sein, welche als endständige axiale Widerlager für die Dosierradsegmente dienen. Im letztgenannten Fall können gegebenenfalls entsprechende Umfangsvorsprünge bzw. Halteringe des Hohlkörpers vorgesehen sein, wobei die einzelnen Dosierradsegmente jedoch aus mehreren, insbesondere aus zwei, Dosierradsegmentabschnitten mit etwa kreisbogenförmigem Querschnitt gebildet sind, welche sich zweckmäßigerweise jeweils um einen Umfang von etwa 180° erstrecken und an ihren einander zugewandten Stirnseiten lösbar aneinander befestigbar sind. Die Dosierradsegmentabschnitte können folglich von entgegengesetzten Seiten auf eine jeweilige äußere Lagerschale der an der Mantelfläche des Hohlkörpers vorgesehenen Lager aufgesetzt und sodann stirnseitig aneinander befestigt, beispielsweise miteinander verschraubt werden, um sie an der jeweiligen Lagerschale lösbar festzulegen.

Die Antriebe der Dosierradsegmente der Dosierwalze können zusätzlich zu ihrer Anordnung im Innern der Dosierradsegmente, wie insbesondere im Innern des diese lagernden Hohlkörpers, in einem Gehäuse untergebracht sein, um für eine Verkapselung zumindest des Antriebsmotors zu sorgen. Darüber hinaus kann zum Schutz der Antriebe vorgesehen sein, dass die Antriebe mit einer inerten Flüssigkeit, insbesondere Öl, wie beispielsweise Transformatoröl oder dergleichen, geflutet ist bzw. sind.

Im Hinblick auf eine genaue Ansteuerung der einzelnen Dosierradsegmente der Dosierwalze kann einem jeden Dosierradsegment vorzugsweise ein Positionserfassungssensor, insbesondere in Form eines Drehzahlsensors, zugeordnet sein, welcher zweckmäßigerweise mit einer Steuer- und/oder Regeleinrichtung der landwirtschaftlichen Maschine in Verbindung steht, welche die einzelnen Dosierradsegmente der Dosierwalze(n) gemäß dem jeweils erforderlichen Massenstrom an Verteilgut steuert und/oder regelt. Ein solcher Drehzahlsensor kann z.B. an einem jeweiligen Dosierradsegment bzw. an dem diese lagernden Hohlkörper, an einem mit den Dosierradsegmenten der Dosierwalze im Eingriff stehenden Zahnrad bzw. an einer dieses tragenden Welle oder einer Welle des Antriebsmotors oder dessen Getriebe vorgesehen sein.

Darüber hinaus kann zu steuerungs- bzw. regeltechnischen Zwecken vorgesehen sein, dass
- einem jeweiligen Antrieb eines jeweiligen Dosierradsegmentes und/oder
- Gruppen von Antrieben mehrerer Dosierradsegmente
ein eigenes Steuermodul zugeordnet ist, welches insbesondere mit einer Steuer- und/oder Regeleinrichtung der Verteilmaschine in Verbindung steht.

In konstruktiver Hinsicht kann mit Vorteil ferner vorgesehen sein, dass den Dosierradsegmenten der Dosierwalze eine Mehrzahl an Leitblechen zugeordnet ist, welche in einem der axialen Länge eines jeweiligen Dosierradsegmentes entsprechenden Abstand voneinander angeordnet sind und sich zwischen jeweils zwei benachbarten Dosierradsegmenten bis unmittelbar an die Mantelfläche der Dosierwalze erstrecken. Die insbesondere an dem auslassseitigen Mantelflächenabschnitt der Dosierradsegmente angeordneten Leitbleche dienen zur Verhinderung einer Vermischung der von jeweils benachbarten Dosierradsegmenten dosierten, gegebenenfalls unterschiedlichen Massenströme an Verteilgut, so dass es insbesondere in einfacher Weise möglich ist, den von einem jeden Dosierradsegment dosierten Massenstrom an Verteilgut mit hoher Genauigkeit, z.B. pneumatisch, einem separaten Verteilorgan zuzuführen.

Gemäß einer Weiterbildung kann ferner vorgesehen sein, dass das Dosierorgan zwei in einem oder in je einem Dosiergehäuse gelagerte, rotierbar angetriebene Dosierwalzen zur Dosierung von verschiedenen Verteilgütern umfasst, wobei die Dosierwalzen des Dosierorgans jeweils eine, insbesondere einander entsprechende, Mehrzahl an Dosierradsegmenten aufweisen, welche unabhängig voneinander rotierbar angetrieben sind, wobei die von je einem Dosierradsegment beider Dosierwalzen dosierten Verteilgüter jeweils gemeinsam ausbringbar sind. Folglich können verschiedene Verteilgüter, z.B. ein mit einem speziellen Dünger versetztes spezielles Saatgut, gemeinsam dosiert werden, wobei das eine Verteilgut mittels der Dosierradsemente der einen Dosierwalze und das andere Dosiergut mittels der - gegebenenfalls verschiedenartigen - Dosierradsegmente der anderen Dosierwalze dosiert werden kann, wonach die jeweiligen Massenstrome an erstem und zweitem Verteilgut, welche mittels miteinander korrespondierender Dosierradsegmente einerseits der einen Dosierwalze, andererseits der anderen Dosierwalze dosiert worden sind, jeweils zusammengeführt und gemeinsam ausgebracht werden können, indem sie z.B. an ein jeweiliges Verteilorgan überführt oder auch rein infolge Schwerkraft unmittelbar auf dem Boden abgelegt werden.

Wie bereits angedeutet, können den Dosierradsegmenten der Dosierwalze vorzugsweise praktisch beliebige bekannte Verteilorgane zugeordnet sein, wobei einem jeweiligen Dosierradsegment der Dosierwalze vorzugsweise ein Verteilorgan, insbesondere aus der Gruppe
- Ablageöffnungen zur oberflächigen Ablage des Verteilgutes auf dem Boden;
- Prallteller zur Querverteilung des Verteilgutes über eine Teilbreite der gesamten Arbeitsbreite;
- Injektionseinrichtungen zum Einbringen des Verteilgutes in den Boden; und
- Säscharen oder Säzinken,
zugeordnet ist.

Wie ebenfalls bereits angedeutet, bietet sich das erfindungsgemäße Dosierorgan insbesondere - wenngleich nicht ausschließlich - für landwirtschaftliche Maschinen in Form von pneumatischen Verteilmaschinen an, welche eine Mehrzahl an einem jeweiligen Dosierradsegment der Dosierwalze des Dosierorgans nachgeordneten Übergabekammern aufweisen, welche einerseits mit wenigstens einem Gebläse in Verbindung stehen und welche andererseits in je eine Förderleitung münden, um das von einem jeweiligen Dosierradsegment der Dosierwalze dosierte Verteilgut pneumatisch an Verteilorgane zu überführen, welche mit unterschiedlichem seitlichen Abstand von der Längsachse der Verteilmaschine angeordnet sind. Derartige Verteilmaschinen können vornehmlich als Pneumatikstreuer, wie sie als solche z.B. aus der eingangs zitierten DE 10 2004 030 240 A1 bekannt ist, und/oder als pneumatische Sämaschinen bzw. Drillmaschinen ausgestaltet sein.

Eine solche pneumatische Verteilmaschine kann insbesondere auch mehrere erfindungsgemäße Dosierorgane mit je einer in je einem Dosiergehäuse gelagerten, rotierbar angetriebenen Dosierwalze und einer Mehrzahl an einem jeweiligen Dosierorgan nachgeordneten Übergabekammern umfassen, welche einerseits mit wenigstens einem Gebläse in Verbindung stehen und welche andererseits in je eine Förderleitung münden, um das von der Dosierwalze eines jeweiligen Dosierorgans dosierte Verteilgut pneumatisch an Verteilorgane zu überführen, wobei die Dosierwalze eines jeweiligen Dosierorgans eine der Anzahl an Übergabekammern entsprechende Anzahl an Dosierradsegmenten aufweist, welche unabhängig voneinander rotierbar angetrieben sind.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische perspektivische Ansicht einer Ausführungsform einer erfindungsgemäßen landwirtschaftlichen Maschine zum Ausbringen von Verteilgut in Form einer als Nachläufer ausgestalteten pneumatischen Verteilmaschine;
- Fig. 2: eine schematische perspektivische Ansicht der Tragkonstruktion der pneumatischen Verteilmaschine gemäß Fig. 1;
- Fig. 3: eine schematische perspektivische Ansicht der Luftführung der pneumatischen Verteilmaschine gemäß Fig. 1 und 2;
- Fig. 4: einen schematischen Längsschnitt der pneumatischen Verteilmaschine gemäß Fig. 1 bis 3;
- Fig. 5: eine schematische perspektivische Detailansicht der pneumatischen Verteilmaschine gemäß Fig. 1 bis 4 im Bereich eines ihrer Dosierorgane;
- Fig. 6: eine schematische perspektivische Schnittansicht der Dosierwalze des Dosierorgans gemäß Fig. 5;
- Fig. 7: einen schematischen Längsschnitt durch die Dosierwalze des Dosierorgans gemäß Fig. 6;
- Fig. 8: eine schematische Querschnittansicht der Dosierwalze entlang der Schnittebene VIII-VIII gemäß Fig. 7;
- Fig. 9: einen dem Längsschnitt der Fig. 7 entsprechenden Detailschnitt der Dosierwalze gemäß Fig. 7 und 8 im Bereich der Lagerung zweier in Axialrichtung benachbarter Dosierradsegmente;
- Fig. 10: eine schematische perspektivische Detailansicht des zur Lagerung der Dosierradsegmente der Dosierwalze gemäß Fig. 6 bis 9 dienenden, im Wesentlichen rohrförmigen Hohlkörpers mit hierin aufgenommenen Antrieben der Dosierradsegmente;
- Fig. 11: eine schematische perspektivische Detailansicht des im Wesentlichen rohrförmigen Hohlkörpers gemäß Fig. 10 ohne die Antriebe der Dosierradsegmente;
- Fig. 12: eine schematische perspektivische Detailansicht eine Abschnittes eines Auslegers der pneumatischen Verteilmaschine gemäß Fig. 1 bis 4 mit mehreren, unter seitlichem Abstand voneinander angeordneten und von je einer Förderleitung mit Teilmassenströmen an dosiertem Verteilgut versorgten Verteilorganen in Form von Pralltellern bzw. Prallplatten, wobei zwei Verteilorgane mit Begrenzungseinrichtungen versehen worden sind;
- Fig. 13: eine der Fig. 12 entsprechende schematische Detailansicht der mit den Begrenzungseinrichtungen versehenen Verteilorgane;
- Fig. 14: schematische perspektivische Detailansichten der Begrenzungseinrichtungen gemäß Fig. 12 und 13;
- Fig. 15: eine schematische Ansicht der beiden inneren Abschnitte zweier sich jeweils seitlich zur Fahrtrichtung erstreckender Ausleger gemäß Fig. 12 und 13 der pneumatischen Verteilmaschine gemäß Fig. 1 bis 4 zur Veranschaulichung des Normalstreuens; und
- Fig. 16: eine der Fig. 15 entsprechende schematische Ansicht zur Veranschaulichung eines erfindungsgemäß möglichen Streumodus', bei welchem die Fahrgassen der pneumatischen Verteilmaschine zumindest im Bereich ihrer Räder ausgespart werden.

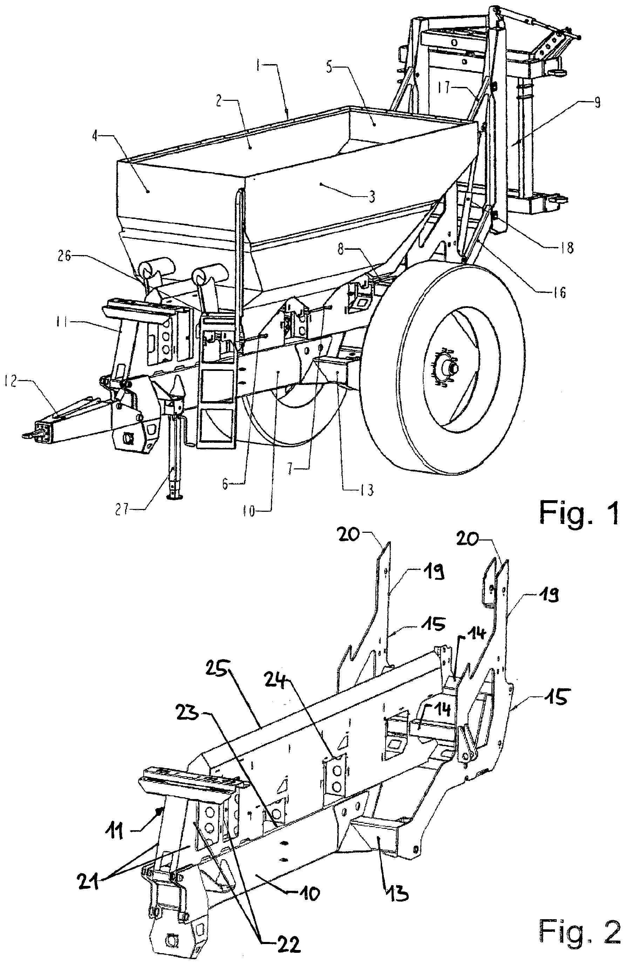

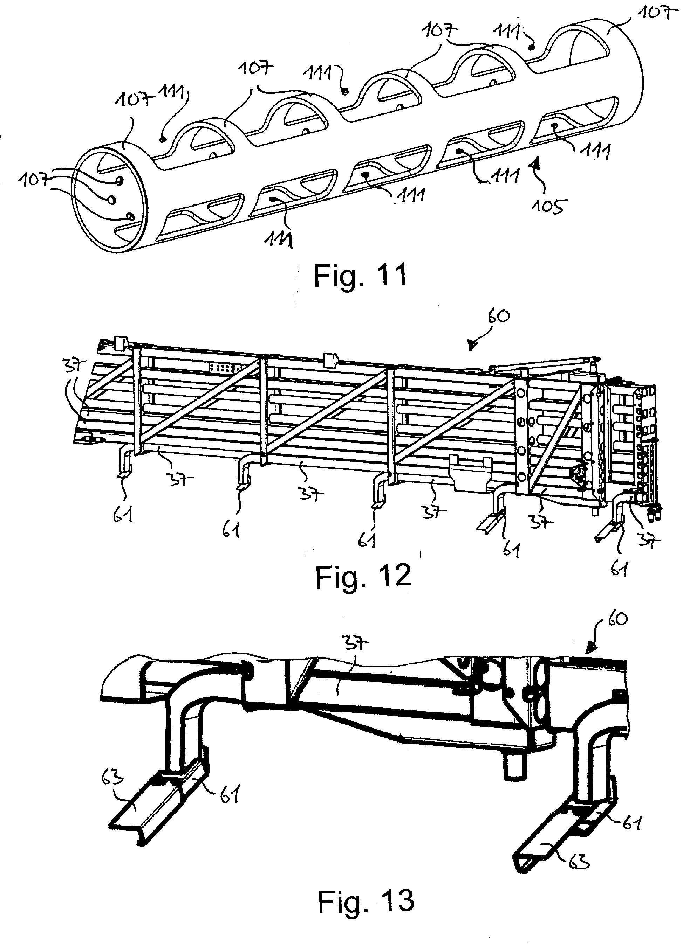

In der Fig. 1 ist ein Ausführungsbeispiel einer pneumatischen Verteilmaschine in Form eines von einer Zugmaschine, wie einem Traktor, gezogenen einachsigen Nachläufers exemplarisch wiedergegeben, welche als pneumatischer Streuer für pulver- oder partikelförmiges Verteilgut, wie Dünger und/oder Saatgut, ausgebildet ist. In Bezug auf die in der Fig. 1 aus Veranschaulichungsgründen nicht dargestellten, sich quer zur Fahrtrichtung erstreckenden Ausleger mit den zu den einzelnen Verteilorganen führenden Förderleitungen sei auf die Ausführungen weiter unten unter Bezugnahme auf die Fig. 12 ff verwiesen.

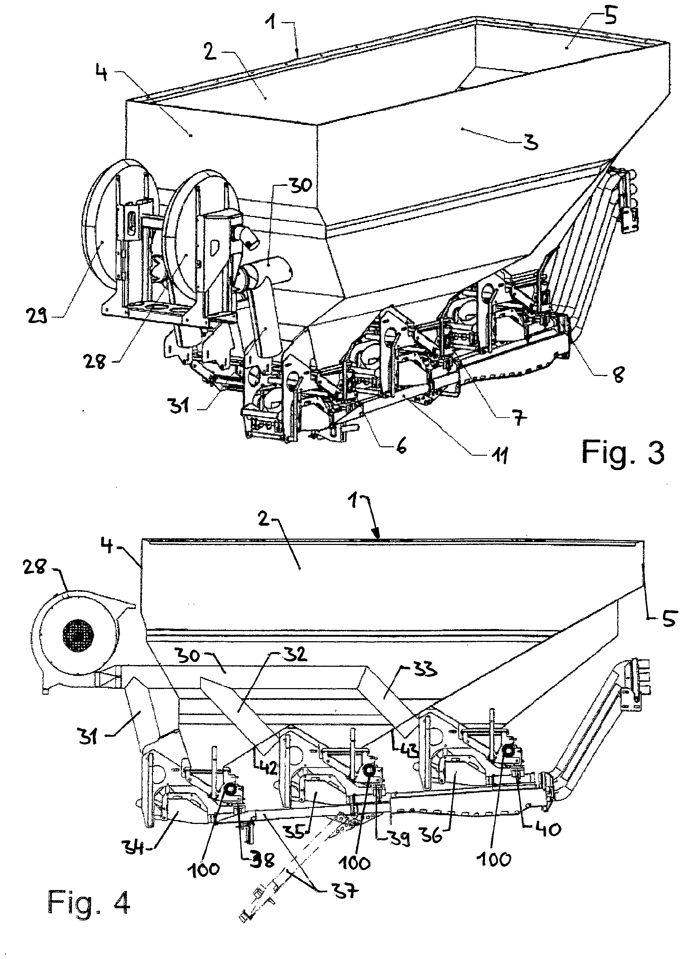

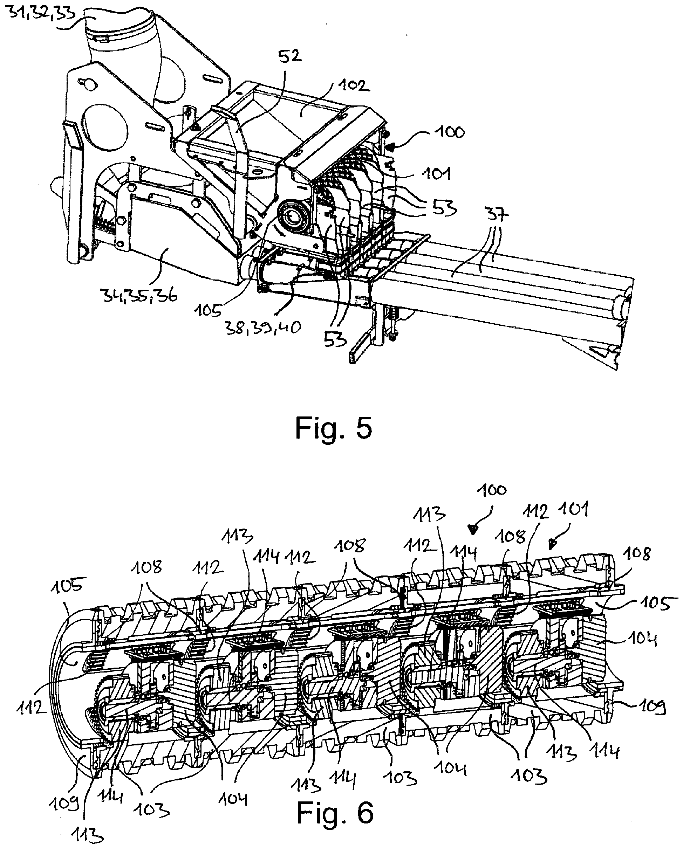

Die Verteilmaschine weist einen Vorratsbehälter 1 zur Aufnahme des Verteilgutes auf, dessen seitlichen 2, 3, vorderen 4 und rückwärtigen Wände 5 sich im unteren Bereich nach innen zu einer Bodenmulde verjüngen, welche beidseits der Längsachse des Vorratsbehälters 1 Austrittsöffnungen 6, 7, 8 aufweist, welchen jeweils ein Dosierorgan (vgl. das Bezugszeichen 100 der Fig. 4) zugeordnet ist, das weiter unten unter Bezugnahme auf die Fig. 5 bis 11 im Einzelnen erläutert ist. Im vorliegenden Fall sind z.B. jeweils drei, also insgesamt sechs Austrittsöffnungen 6, 7, 8 an jeder Seite des Vorratsbehälters 1 vorgesehen, welche mit jeweils einem Dosierorgan 100 versehen sind. Die in der Fig. 1 nicht im Einzelnen erkennbaren Dosierorgane 100 sind beispielsweise in unterschiedlicher Höhe angeordnet und versorgen jeweils eine Mehrzahl an Förderleitungen mit dem dosierten Verteilgut, wobei die Förderleitungen jeweils zu Paketen zusammengefasst sind und zunächst nach hinten zu einem Hubrahmen 9 geführt und sodann nach außen umgelenkt sind. Der Hubrahmen 9 nimmt die in der Fig. 1 nicht gezeigten Ausleger (vgl. die Fig. 12 und 13) auf, welche sich zu beiden Seiten im Wesentlichen senkrecht zur Fahrtrichtung erstrecken. Jeder Ausleger ist dabei zweckmäßigerweise schwenkbar an dem Hubrahmen 9 angelenkt und mehrgelenkig ausgeführt, so dass einzelne Auslegerabschnitte gemeinsam mit den Förderleitungen aus einer nach außen gestreckten Betriebsposition in eine zusammengeklappte Ruhe- bzw. Fahrtposition angeklappt werden können. Die von den Auslegern aufgenommenen Förderleitungen enden in unterschiedlichen Abständen von der Längsachse der Verteilmaschine an Verteilorganen, welche beispielsweise als Prallteller bzw. Prallplatten ausgestaltet sind, um den aus den Förderleitungen austretenden Verteilgutstrom in jeweils nebeneinander angeordnete Flächenbereiche auf dem Boden zu verteilen (vgl. die Fig. 12 bis 16).

Wie weiterhin der Fig. 1 und insbesondere der Fig. 2 zu entnehmen ist, ist der Vorratsbehälter 1 von einem Tragrahmen aufgenommen, welcher im vorliegenden Fall eine zentrale Strebe 10, z.B. in Form eines Rechteckrohres, aufweist, an dessen Oberseite ein Aufbau 11 festgelegt ist, welcher beispielsweise eine tunnelförmige Gestalt besitzt. Am vorderen Ende der Strebe 10 ist eine Deichsel 12, beispielsweise federnd, angebracht, während am hinteren Ende ein Achsrahmen 13 festgelegt ist. Am hinteren Ende des Aufbaus 11 ist eine Tragkonstruktion angebracht, welche aus Quertraversen 14 sowie diese an ihren Enden verbindenden Seitenwangen 15 gebildet ist. An den beiden Seitenwangen 15 sind Lenker 16, 17 gelagert, welche mit ihrem anderen Ende an dem Hubrahmen 9 angelenkt sind und mittels Hubstützen 18, z.B. in Form von Hydraulikzylindern, den Hubrahmen 9 anheben und absenken können. Die sich nach oben ersteckenden Abschnitte 19 der Seitenwangen 15 stützen mittels ihrer abgeschrägten Enden 20 die geneigte Rückwand 5 des Vorratsbehälters 1 ab. Der beim gezeigten Ausführungsbeispiel tunnelförmige Aufbau 11 weist an seinen Seitenwänden 21 z.B. Montageöffnungen 22, 23 und Halterungen 24 zur Anordnung von Funktionsteilen auf, wobei die Halterungen 24 die weiter unten näher beschriebenen Dosierorgane einschließlich deren Antriebe aufnehmen. Innerhalb des tunnelförmigen Aufbaus 11 können die Versorgungsleitungen, wie Hydraulikleitungen und/oder elektrische Leitungen, verlegt sein. An seiner Oberseite ist der Aufbau 11 nach Art eines nach oben spitz zulaufenden Giebels 25 ausgebildet, welcher gemeinsam mit seinen Seitenwänden 21 eine Trennwand in dem Vorratsbehälter 1 bildet. Der Giebel 25 leitet das in dem Vorratsbehälter 1 befindliche Verteilgut zu den rechts und links hiervon angeordneten Austrittsöffnungen 6, 7, 8 des Vorratsbehälters 1 mit den diesen nachgeordneten Dosierorganen 100 ab. An dem Aufbau 25 kann ferner z.B. ein Aufstiegspodest 26 angeordnet sein, welches über eine Leiter zugänglich ist. Ferner ist an der Strebe 10 ein Abstellfuß 27 schwenkbar befestigt.

Wie insbesondere auf den Fig. 3 und 4 hervorgeht, sind vor der Vorderwand 4 des Vorratsbehälters 1 zwei Gebläse 28, 29 angeordnet, welche zur Erzeugung eines Luftförderstromes zum Transport des mittels der Dosierorgane 100 dosierten Verteilgutes durch die Förderleitungen dienen und aus Platzgründen beispielsweise mit ihrer Achse quer zur Fahrtrichtung angeordnet sind. Die Druckleitung 30 eines jeden Gebläses 28, 29 ist z.B. durch den Vorratsbehälter 1 hindurch geführt und weist je einen, einem jeden, insgesamt mit dem Bezugseichen 100 versehenen Dosierorgan zugeordneten Abgang 31, 32, 33 auf, welcher stromauf eines jeweiligen Dosierorgans 100 an einen jeweiligen Luftverteiler 34, 35, 36 mündet, beispielsweise mittels nicht zeichnerisch wiedergegebener Schlauchleitungen. Letzterer teilt die Druckluft auf die einem jeden Dosierorgan 100 zugeordnete Anzahl an Förderleitungen 37 auf, von welchen in der Fig. 4 aus Veranschaulichungsgründen nur die vorne liegenden Förderleitungen 37 gezeigt sind. Unmittelbar stromab eines jeden Luftverteilers 34, 35, 36 ist jeder Förderleitung 37 eine Übergabekammer 38, 39, 40 zugeordnet, welche in üblicher Weise mit einem eine Düse und einen Diffusor umfassenden Injektor (nicht gezeigt) ausgestattet sein kann und in welche das dosierte Verteilgut von dem jeweiligen Dosierorgan 100 übergeben wird. Während die von dem Gebläse 28 beaufschlagten Förderleitungen 37 in den in Fahrtrichtung linken Ausleger führen, führen die von dem Gebläse 29 versorgten Förderleitungen 37 in den in Fahrtrichtung rechten Ausleger (vgl. auch die Fig. 12 ff). Die Anzahl an einem jeden Dosierorgan 100 zugeordneten Förderleitungen 37 entspricht der relativ großen Breite einer üblichen Teilbreitenschaltung während des Betriebs. Die Förderleitungen 37 können ferner zwischen den Dosierorganen 100 als getrennte Abschnitte ausgebildet sein, um einen Abschnitt derselben, z.B. gemeinsam mit einer jeweiligen Übergabekammer 38, 39, 40, nach unten klappen (vgl. die strichlinierte Darstellung der Fig. 4) und auf diese Weise z.B. Abdrehproben durchführen oder den Vorratsbehälter 1 entleeren zu können.

Die Fig. 5 zeigt eine Detailansicht der pneumatischen Verteilmaschine im Bereich eines ihrer Dosierorgane 100, welches eine rotierbar angetriebene Dosierwalze 101 aufweist, welche im vorliegenden Fall beispielsweise nach Art einer Nockenwalze ausgestaltet ist, aber je nach Art des Verteilgutes selbstverständlich auch nach Art einer Zellenradwalze oder in beliebiger anderer bekannter Weise ausgebildet sein kann. Jedes Dosierorgan 100 versorgt dabei eine Mehrzahl an - hier fünf - Förderleitungen 37 und umfasst ein Dosiergehäuse 102, welches unterhalb einer jeweiligen Austrittsöffnung 6, 7, 8 des Vorratsbehälters 1 angeordnet ist (siehe oben) und das Verteilgut bis an die Oberfläche der Dosierwalze 101 zu leiten vermag. Das Dosiergehäuse 102 kann beispielweise mittels eines Hebels 52 nach unten schwenkbar sein, um den Raum unterhalb der Dosierwalze 101 zugänglich zu machen und den Vorratsbehälter 1 entleeren zu können.

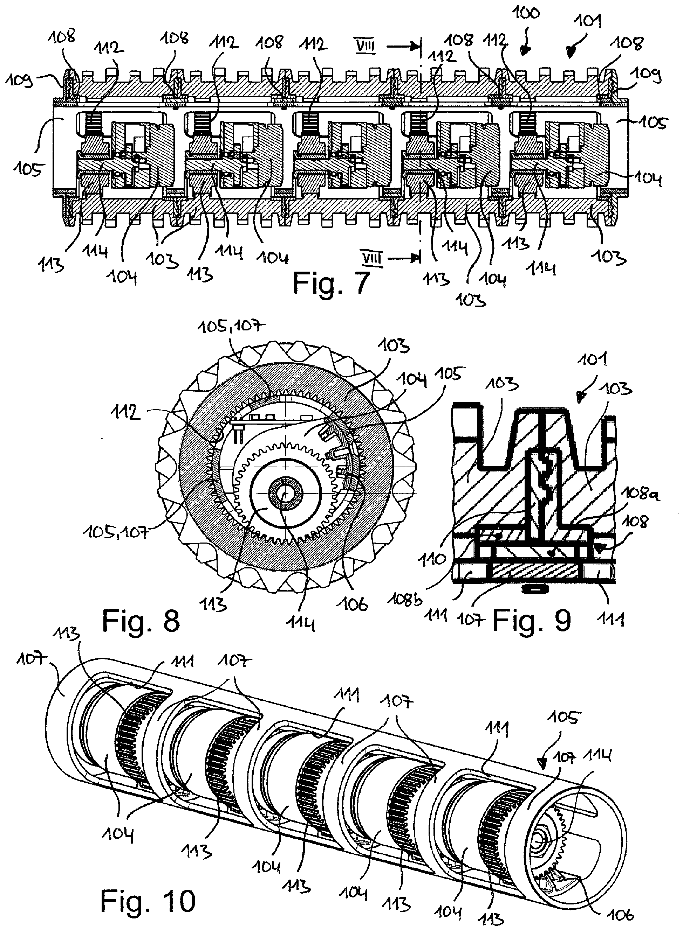

Wie insbesondere den Fig. 6 bis 8 zu entnehmen ist, umfasst die Dosierwalze 101 eines jeden Dosierorgans 100 eine der Anzahl an Förderleitungen 37, welche von dem Dosierorgan 100 versorgt sind, entsprechende Anzahl an - hier fünf - Dosierradsegmenten 103, welche unabhängig voneinander rotierbar angetrieben sind. Dies geschieht bei dem gezeigten Ausführungsbeispiel mittels je eines, einem jeweiligen Dosierradsegment 103 zugeordneten, unabhängig voneinander drehzahlsteuer- und/oder regelbaren Elektromotors 104, um sowohl einzelne Dosierradsegmente 103 der Dosierwalze 101 stillsetzen als auch die Dosierradsegmente 103 mit unterschiedlichen Rotationsgeschwindigkeiten antreiben zu können. Die zum Antrieb der Dosierradsegmente 103 dienenden Elektromotoren 104 sind im vorliegenden Fall von je einem als Getriebemotor ausgebildeten bürstenlosen Gleichstrommotors ausgestaltet, kann aber grundsätzlich selbstverständlich auch als andersartiger Elektromotor oder als Hydraulikmotor zum Einsatz gelangen. Wie insbesondere auch aus der Detailansicht der Fig. 9 sowie aus der Fig. 10 hervorgeht, sind die Dosierradsegmente 103 der Dosierwalze 101 auf einem sich koaxial zu ihrer Drehachse erstreckenden, im Wesentlichen rohrförmigen Hohlkörper 105 gelagert, welcher starr, aber vorzugsweise lösbar, in dem Dosiergehäuse 102 festgelegt ist und wie er in der Fig. 11 nochmals als solcher dargestellt ist. Die - hier elektrischen - Antriebe 104 der Dosierradsegmente 104 sind vor äußeren Einwirkungen geschützt im Innern des im Wesentlichen rohrförmigen Hohlkörpers 105 aufgenommen und beispielsweise an Befestigungsflanschen 106 im Innern des Hohlkörpers 105 (vgl. die Fig. 8 und 10) verschraubt. Die Befestigungsflansche 106 können dabei z.B. mit dem Innenumfang des Hohlkörpers 105 verschweißt oder mit diesem verschraubt sein (vgl. die Befestigungsbohrungen 107 der Fig. 11).

Der im Wesentlichen rohrförmige Hohlkörper 105 besitzt eine insgesamt etwa kreiszylindrische Form und umfasst im vorliegenden Fall eine Mehrzahl an in Axialrichtung beabstandeter Abschnitte 107, welche sich um seinen gesamten Umfang strecken und zur Aufnahme von an deren Außenumfang aufgebrachten Lagern 108 dienen, mittels welcher ein jedes Dosierradsegment 104 an seinen beiden axialen Enden und in Axialrichtung aneinander angrenzend gelagert ist. Die vollumfänglichen Abschnitte 107 sind dabei einerseits an den beiden Enden des im Wesentlichen rohrförmigen Hohlkörpers 105 vorgesehen, andererseits in äquidistanten Abständen in Axialrichtung desselben, wobei der Axialabstand der vollumfänglichen Abschnitte 107 an die axiale Länge eines jeden Dosierradsegmentes 103 angepasst ist. In der Fig. 9 ist erkennbar, dass die Lager 108 im vorliegenden Fall zwecks Erzielung eines sehr geringen Bauraumes als Gleitlager ausgebildet sind und einerseits eine innere Lagerschale 108a, welche auf dem Außenumfang eines jeweiligen vollumfänglichen Abschnittes 107 des im Wesentlichen rohrförmigen Hohlkörpers 105 sitzt, andererseits eine äußere Lagerschale 108b aufweisen, auf welchen die axialen Enden der Dosierradsegmente 103 sitzen. Im Falle zweier aneinander angrenzender Dosierradsegmente 103 sind die Lager 108 als Zwillingslager ausgebildet und weisen zwei unabhängig voneinander in Bezug auf die innere Lagerschale 108a drehbare äußere Lagerschalen 108b auf, welche das Ende jeweils eines der benachbarten Dosierradsegmente 103 aufnimmt. Alternativ können freilich auch getrennte Lager für jedes Dosierradsegment 103 vorgesehen sein (nicht gezeigt). Die Dosierradsegmente 103 sind auf diese Weise von einem Ende des mit den Lagern 108 bestückten Hohlkörpers 105 her in Axialrichtung auf den Hohlkörper 105 aufschiebbar, wobei an den Enden des im Wesentlichen rohrförmigen Hohlkörpers 105 jeweils ein als Widerlager für die Dosierradsegmente 103 dienender Haltering 109 (vgl. die Fig. 6 und 7) vorgesehen sein kann, von welchen zumindest einer lösbar am Außenumfang des Hohlkörpers 105 befestigbar ist, um die Dosierradsegmente 103 axialfest, aber unabhängig voneinander drehbar sowie gegeneinander austauschbar an dem Hohlkörper 105 zu lagern. In der Fig. 9 ist ferner erkennbar, dass die in Axialrichtung dicht an dicht auf dem im Wesentlichen rohrförmigen Hohlkörper 105 gelagerten Dosierradsegmente 103 an ihren einander zugewandten Stirnseiten mit Gleitringdichtungen 110 - hier in Form von Labyrinthdichtungen - gegeneinander abgedichtet sind, um ein Eindringen von Verteilgut sowie auch von Schmutz und Feuchtigkeit in den die Antriebe 104 aufnehmenden Innenraum des Hohlkörpers 105 zu verhindern.

Der im Wesentlichen rohrförmige Hohlkörper 105 weist zwischen seinen vollumfänglichen Abschnitten 107 jeweils eine oder mehrere Durchgangsöffnungen 111 auf, welche im montierten Zustand der Dosierradsegmente 103 von diesen jeweils übergriffen sind. Die Durchgangsöffnungen 111 des Hohlkörpers 105 dienen zur Verbindung eines jeweiligen Antriebs 104 mit einem jeweiligen Dosierradsegment 103, welches zu diesem Zweck eine sich um einen Innenumfangsabschnitt erstreckende Innenverzahnung 112 aufweist (vgl. die Fig. 6 bis 8),die durch eine jeweilige Durchgangsöffnung 111 des Hohlkörpers 105 freigelassen ist. Die Innenverzahnung 112 eines jeweiligen Dosierradsegmentes steht mit je einem Zahnrad 113 im Eingriff, welches auf je einer, zweckmäßigerweise in Bezug auf die Drehachse der Dosierradsegmente 103 exzentrisch angeordneten Abtriebswelle 114 eines jeweiligen Antriebs 104 sitzt (vgl. insbesondere die Fig. 7 und 8). Wie am besten aus der Fig. 10 hervorgeht, ist jeder aus je einem elektrischen Getriebemotor gebildete Antrieb 104 ferner in einem Gehäuse verkapselt untergebracht, um ihn bestmöglich vor mechanischen Einwirkungen sowie auch vor Schmutz und Feuchtigkeit zu schützen.

Darüber hinaus ist jedem Dosierradsegment 103 vorzugsweise ein nicht zeichnerisch dargestellter Positionserfassungssensor, wie ein Drehzahlsensor oder dergleichen, zugeordnet, welcher beispielsweise in einen jeweiligen Motor der Antriebe 104 oder in deren Getriebe integriert sein kann. Sowohl die Sensoren als auch die Antriebe 104 stehen mit einzelnen oder gemeinsamen Steuermodulen einer gleichfalls nicht zeichnerisch wiedergegebenen Steuer- und/oder Regeleinrichtung der Verteilmaschine in Wirkverbindung, um die einzelnen Dosierradsegmente 103 der Dosierorgane 100 unabhängig voneinander drehzahlsteuern und/oder -regeln zu können und dabei eine sehr genaue Verteilung des Verteilgutes auf dem Feld gemäß Applikationskarten sicherzustellen, wobei die Position der Verteilmaschine auf dem Feld mittels bekannter Positionserfassungssysteme, wie GPS oder dergleichen, in Echtzeit ermittelt werden kann. Ferner lassen sich lokale Unter- bzw. Überversorgungen des Bodens mit dem Verteilgut aufgrund von Kurvenfahrten oder beim Ein- und Ausschalten der Dosierorgane 100 zu Beginn und zum Abschluss der Verteilarbeit bzw. bei einer jeweiligen Fahrt aus dem Vorgewende hinaus entlang einer Feldfahrgasse bis zum entgegengesetzten Vorgewende in der weiter oben beschriebenen Weise mit sehr hoher Genauigkeit kompensieren.

Um sicherzustellen, dass ein jeweiliges Dosierradsegment 103 der Dosierwalze 101 eines jeden Dosierorgans 100 ausschließlich das ihm zugeordnete Verteilorgan versorgt und nicht etwa von benachbarten Dosierradsegmenten 103 bereits dosierte Massenströme an Verteilgut sich teilweise vermischen bzw. in die Übergabekammer 38, 39 40 einer benachbarten Förderleitung 37 gelangen, erweist es sich im Übrigen von Vorteil, wenn der Dosierwalze 101 eine Mehrzahl an Leitblechen 53 (vgl. die Fig. 5) zugeordnet ist, welche in einem der axialen Länge eines jeweiligen Dosierradsegmentes 103 der Dosierwalze 101 entsprechenden Abstand voneinander angeordnet sind und sich vom Außenumfang der Dosierwalze 101 zwischen jeweils zwei benachbarten Dosierradsegmenten 103 nach unten bis zum oberen Einlass einer jeden Übergabekammer 34, 35, 36 erstrecken. In der Fig. 5 ist auch erkennbar, dass der im Wesentlichen rohrförmige Hohlkörper 105 vorzugsweise an zumindest einem seiner Enden das Dosiergehäuse 102 nach außen durchsetzt, um die in seinem Innern untergebrachten Antriebe 104 von seiner Axialrichtung her elektrisch zu kontaktieren, indem die Versorgungsleitungen gleichfalls im Innern des Hohlkörpers 105 verlegt sind.

In der Fig. 12 ist ein Ausschnitt eines insgesamt mit dem Bezugszeichen 60 versehenen Auslegers - hier: des in Fahrtrichtung betrachtet linken Auslegers 60 - der pneumatischen Verteilmaschine schematisch wiedergegeben, welcher an deren Hubrahmen 9 (vgl. die Fig. 1) schwenkbar befestigt ist. Wie bereits erwähnt, nimmt ein jeder Ausleger 60 eine Mehrzahl der sich an eine jeweilige Übergabekammer 38, 39, 40 anschließenden Förderleitungen 37 des Verteilgutes - üblicherweise die Hälfte aller Förderleitungen 37 - auf, wobei die Förderleitungen 37 in unterschiedlichen Abständen von der Längsachse der Verteilmaschine an Verteilorganen enden, welche im vorliegenden Fall als Prallteller 61 bzw. Prallplatten ausgestaltet sind, um den aus einer jeweiligen Förderleitung 37 austretenden, von einem jeweiligen Dosierradsegment 103 der Dosierorgane 100 dosierten Verteilgutstrom in jeweils nebeneinander angeordnete Flächenbereiche auf dem Boden zu verteilen.

Wie insbesondere der abgebrochen dargestellten Detailansicht der Fig. 13 zu entnehmen ist, können dabei der oder die benachbarten Prallteller 61, von welchen das Verteilgut teilweise in die Fahrspuren des Nachläufers und/oder des diesen ziehenden Traktors gelangt, mit Begrenzungseinrichtungen 63 versehen werden, um zu verhindern, dass das Verteilgut (auch) entlang der Fahrspuren verteilt wird und auf diese Weise für eine Einsparung an Verteilgut zu sorgen. Die Einstellung eines entsprechend der Reifenbreite reduzierten Massenstromes an Verteilgut, mit welchem die mit den Begrenzungseinrichtungen 63 versehenen Prallteller 61 versorgt werden, ist aufgrund der fein unterteilten Teilbreiten entsprechend der Anzahl an Verteilorganen in Form von Pralltellern 61 mittels der erfindungsgemäßen Dosierorgane 100 auf einfache Weise dadurch möglich, dass das dem jeweiligen Prallteller 61 über die zugehörige Förderleitung 37 zugeordnete Dosierradsegment 103 mit einer gegenüber den anderen Dosierradsegmenten 103 geringeren Rotationsgeschwindigkeit angetrieben wird.

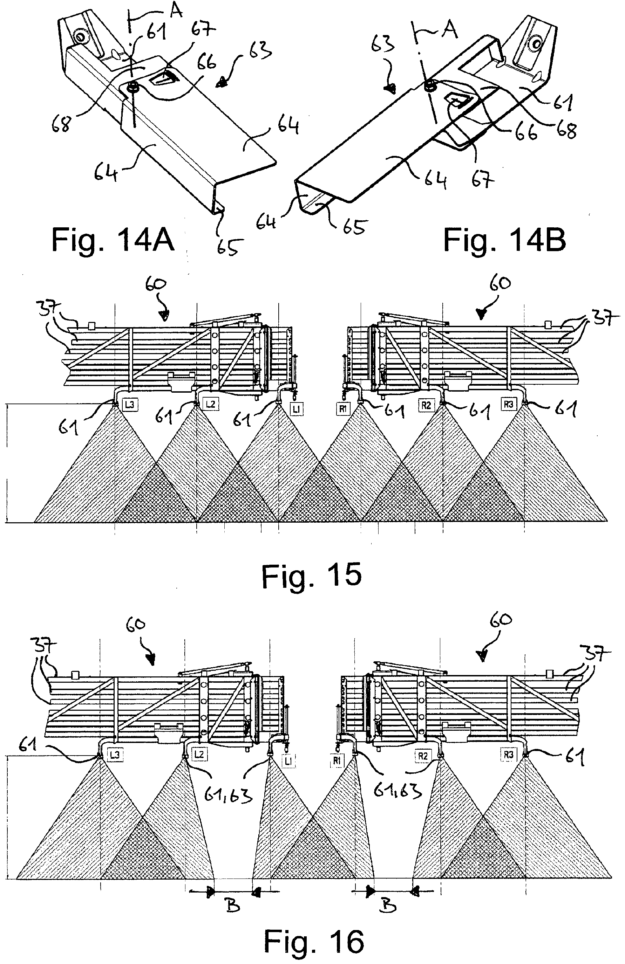

In den Fig. 14A und 14B sind schematische Ansichten einer Ausführungsform einer solchen, an einem Prallteller 61 lösbar befestigten oder gemeinsam mit dem Prallteller 61 ausgebildeten Begrenzungseinrichtung 63 schematisch wiedergegeben, welche sich von bekannten Grenzstreueinrichtungen in Form von Leitblechen, wie sie bei pneumatischen Verteilmaschinen zur äußeren Begrenzung der Arbeitsbreite zuweilen Einsatz finden, einerseits dadurch unterscheiden, dass die Begrenzungseinrichtung 63 ein im Wesentlichen U-förmiges Profil aufweist, dessen U-Steg 64 sich in dem an den Prallteller 61 montierten Zustand etwa senkrecht zur Ebene des Pralltellers 61 erstreckt. An den U-Steg 64 der Begrenzungseinrichtung 63 schließt sich jeweils unter einem etwa rechten Winkel einerseits an der oberen Seite ein langer U-Schenkel 64, andererseits an der unteren Seite ein kurzer U-Schenkel 65 an, wobei die U-Schenkel 64, 65 im montierten Zustand in zur Ebene des Pralltellers 61 etwa parallelen Ebenen angeordnet sind. Auf diese Weise wird zuverlässig verhindert, dass die von der Begrenzungseinrichtung 63 abprallenden Verteilgutpartikel bis in die Teilbreiten benachbarter Verteilorgane hinein reflektiert werden.

Andererseits unterscheiden sich die Begrenzungseinrichtungen 63 von herkömmlichen, an dem äußeren Prallteller zur Begrenzung der Arbeitsbreite montierbaren Grenzstreueinrichtungen insbesondere dadurch, dass sie verstellbar an dem Prallteller 61 montiert oder - im Falle einer Ausbildung der Begrenzungseinrichtung 63 gemeinsam mit dem Prallteller 61 - in Bezug auf den Prallteller 61 verstellt werden können, um unterschiedlichen Verteilparametern, wie insbesondere der Breite und der Position der durch die Reifen vorgegebenen Fahrspuren, aber beispielsweise auch der Anbauhöhe der Ausleger 60 bzw. dem Abstand der Verteilorgane 61 vom Boden, des Verteilguttyps einschließlich dessen Flugeigenschaften, dem seitlichen Abstand der Verteilorgane 61 voneinander etc., Rechnung tragen zu können. Die Verstellbarkeit der Begrenzungseinrichtungen 63 ist beim vorliegenden Ausführungsbeispiel dadurch gegeben, dass sie um eine sich etwa senkrecht zu den beiden U-Schenkeln 64, 65 bzw. senkrecht zur Ebene des Pralltellers 61 erstreckende Achse A in Bezug auf den Prallteller 61 schwenkbar sind, was beispielsweise mittels einer korrespondierende Bohrungen einerseits des Pralltellers 61, andererseits der Begrenzungseinrichtung 63 durchsetzenden Schraube 66 oder dergleichen geschehen kann. Zur Anzeige des jeweils eingestellten Verstellwinkels kann eine Skala 67 dienen, welche bei dem gezeigten Ausführungsbeispiel an einem fest mit dem Prallteller 61 verbundenen Tragabschnitt 68 des langen U-Schenkels 64 der Begrenzungseinrichtung 63 angeordnet und abschnittsweise durch eine Durchgangsöffnung des den Tragabschnitt 68 übergreifenden und hieran um die Achse A schwenkbar angelenkten endständigen Abschnitt des langen U-Schenkels 64 sichtbar wird.

Darüber hinaus kann gemäß einer Weiterbildung der Begrenzungseinrichtung 63 vorgesehen sein, dass sie nicht nur manuell, sondern motorisch und insbesondere fernbedient einstellbar ist, wie beispielsweise mittels eines gesteuert angetriebenen Motors, Aktuators oder dergleichen (nicht zeichnerisch dargestellt). Dabei kann beispielsweise die Steuer- und/oder Regeleinrichtung der Verteilmaschine zur Eingabe eines gewünschten Einstellwinkels der Begrenzungseinrichtung 63 und/oder zur Eingabe der vorgenannten Parameter ausgebildet sein, wobei die Steuer- und/oder Regeleinrichtung im letztgenannten Fall den geeigneten Einstellwinkel der Begrenzungseinrichtung 63 in Abhängigkeit der eingegebenen Parameter zu errechnen vermag.

Während in der Fig. 15 die Situation des Normalstreuens gezeigt ist, bei welchem alle Verteilorgane 61 mittels eines jeweiligen Dosierradsegmentes 103 der Dosierwalzen 101 der Dosierorgane 100 mit dem jeweils gewünschten Massenstrom an Verteilgut versorgt werden und die von den Pralltellern 61 jeweils reflektierten Streukegel einander überlappen, um für eine gleichmäßige Querverteilung zu sorgen, ist in der Fig. 16 die Situation dargestellt, wie sie sich ergibt, wenn die Fahrgassen der pneumatischen Verteilmaschine zumindest um die Breite B ihrer Räder bzw. Reifen in der vorbeschriebenen Weise ausgespart werden, indem die einer jeweiligen Fahrgasse benachbarten Prallteller 61 einerseits mit einer entsprechend justierten Begrenzungseinrichtung 63 (vgl. insbesondere die Fig. 14A und 14B) versehen und andererseits mittels dem jeweiligen, ihnen zugeordneten Dosierradsegment 103 der Dosierwalze 101 des jeweiligen Dosierorgans 100 mit einem entsprechend geringeren Massenstrom an Verteilgut versorgt werden. Die Streukegel der mit den Begrenzungseinrichtungen 63 bestückten Prallteller 61 erstrecken sich auf diese Weise nicht mehr in die Radspuren B hinein, wobei aufgrund des verminderten Massenstromes an Verteilgut, mit welchem die mit den Begrenzungseinrichtungen 63 bestückten Prallteller 61 über die Förderleitungen 37 versorgt werden, auch keine Überversorgung des Bodens mit Verteilgut beidseits der Fahrspuren B auftritt.

## Patentansprüche

1. Dosierorgan (100) mit einer in einem Dosiergehäuse (102) gelagerten, rotierbar angetriebenen Dosierwalze (101), welches zum Einsatz in einer landwirtschaftlichen Maschine zum Ausbringen von Verteilgut geeignet ist, wobei die Dosierwalze (101) eine Mehrzahl an auf einem sich koaxial zu deren Drehachse erstreckenden Hohlkörper (105) gelagerten Dosierradsegmenten (103) aufweist und einem jeweiligen Dosierradsegment (103) der Dosierwalze (101) ein eigener Antrieb (104) zugeordnet ist, um die Dosierradsegmente (103) unabhängig voneinander anzutreiben, wobei die Antriebe (104) der Dosierradsegmente (103) der Dosierwalze (101) im Innern der Dosierradsegmente (103) angeordnet sind, wobei die Antriebe (104) der Dosierradsegmente (103) der Dosierwalze (101) im Innern des die Dosierradsegmente (103) lagernden Hohlkörpers (105) festgelegt sind und jeweils ein einem jeweiligen Dosierradsegment (103) zugeordnetes Zahnrad (113) aufweisen, die Mantelfläche des Hohlkörpers (105) zumindest an ihrem einem jeweiligen Zahnrad (113) zugeordneten Axialabschnitt eine Durchgangsöffnung (111) aufweist und ein jeweiliges Zahnrad (113) mit einer jeweiligen Innenverzahnung (112) eines jeweiligen Dosierradsegmentes (103) im Eingriff steht.

2. Dosierorgan nach Anspruch 1, **dadurch gekennzeichnet, dass** die Antriebe (104) der Dosierwalze (101) des Dosierorgans (100) Elektro- oder Hydraulikmotoren umfassen.

3. Dosierorgan nach Anspruch 1 oder 2, **dadurch gekennzeichnet, dass** die Dosierwalze (101) des Dosierorgans (100) wenigstens drei unabhängig voneinander angetriebene Dosierradsegmente (103) aufweist.

4. Dosierorgan nach einem der Ansprüche 1 bis 3, **dadurch gekennzeichnet, dass** die Dosierradsegmente (103) der Dosierwalze (100) mittels Gleit- (108) und/oder Wälzlagern auf dem sich koaxial zu deren Drehachse erstreckenden Hohlkörper (105) gelagert sind.

5. Dosierorgan nach einem der Ansprüche 1 bis 4, **dadurch gekennzeichnet, dass** die Dosierradsegmente (103) der Dosierwalze (101) an ihren einander zugewandten Stirnseiten mittels Gleitringdichtungen (110), insbesondere in Form von Labyrinthdichtungen, gegeneinander abgedichtet sind.

6. Dosierorgan nach einem der Ansprüche 1 bis 5, **dadurch gekennzeichnet, dass** die Dosierradsegmente (103) der Dosierwalze (101) austauschbar auf dem Hohlkörper (105) gelagert sind, wobei die Dosierradsegmente (103) insbesondere
- in Axialrichtung auf den Hohlkörper (105) aufschiebbar sind; und/oder
- mehrteilig in Form von lösbar aneinander befestigbaren, im Wesentlichen kreisbogenförmigen Dosierradsegmentabschnitten (103) ausgebildet sind.

7. Dosierorgan nach einem der Ansprüche 1 bis 6, **dadurch gekennzeichnet, dass** die Antriebe (104) der Dosierradsegmente (103) der Dosierwalze (101) in einem Gehäuse untergebracht und/oder mit einer inerten Flüssigkeit, insbesondere Öl, geflutet sind.

8. Dosierorgan nach einem der Ansprüche 1 bis 7, **dadurch gekennzeichnet, dass** einem jeden Dosierradsegment (103) der Dosierwalze (101) ein Positionserfassungssensor, insbesondere in Form eines Drehzahlsensors, zugeordnet ist.

9. Dosierorgan nach einem der Ansprüche 1 bis 8, **dadurch gekennzeichnet, dass**
- einem jeweiligen Antrieb (104) eines jeweiligen Dosierradsegmentes (103) und/oder
- Gruppen von Antrieben (104) mehrerer Dosierradsegmente (103)
ein eigenes Steuermodul zugeordnet ist, welches insbesondere mit einer Steuer- und/oder Regeleinrichtung der Verteilmaschine in Verbindung steht.

10. Dosierorgan nach einem der Ansprüche 1 bis 9, **dadurch gekennzeichnet, dass** der Dosierwalze (101) eine Mehrzahl an Leitblechen (53) zugeordnet ist, welche in einem der axialen Länge eines jeweiligen Dosierradsegmentes (103) entsprechenden Abstand voneinander angeordnet sind und sich zwischen jeweils zwei benachbarten Dosierradsegmenten (103) bis unmittelbar an die Mantelfläche der Dosierwalze (101) erstrecken.

11. Dosierorgan nach einem der Ansprüche 1 bis 10, **dadurch gekennzeichnet, dass** das Dosierorgan (100) zwei in einem oder in je einem Dosiergehäuse (102) gelagerte, rotierbar angetriebene Dosierwalzen (101) zur Dosierung von verschiedenen Verteilgütern umfasst, wobei die Dosierwalzen (101) des Dosierorgans (100) jeweils eine, insbesondere einander entsprechende, Mehrzahl an Dosierradsegmenten (103) aufweisen, welche unabhängig voneinander rotierbar angetrieben sind, wobei die von je einem Dosierradsegment (103) beider Dosierwalzen (101) dosierten Verteilgüter jeweils gemeinsam ausbringbar sind.

12. Landwirtschaftliche Maschine zum Ausbringen von Verteilgut, insbesondere Dünger und/oder Saatgut, mit wenigstens einem Dosierorgan (100) gemäß dem Anspruch 1.

13. Landwirtschaftliche Maschine nach Anspruch 12, **dadurch gekennzeichnet, dass** das wenigstens eine Dosierorgan die kennzeichnenden Merkmale wenigstens eines der Ansprüche 2 bis 11 aufweist.

14. Landwirtschaftliche Maschine nach Anspruch 12 oder 13, **dadurch gekennzeichnet, dass** einem jeweiligen Dosierradsegment (103) der Dosierwalze (101) des Dosierorgans (100) ein Verteilorgan, insbesondere aus der Gruppe
- Ablageöffnungen zur oberflächigen Ablage des Verteilgutes auf dem Boden;
- Prallteller (61) zur Querverteilung des Verteilgutes über eine Teilbreite der gesamten Arbeitsbreite;
- Injektionseinrichtungen zum Einbringen des Verteilgutes in den Boden; und
- Säscharen oder Säzinken,
zugeordnet ist.

15. Landwirtschaftliche Maschine nach einem der Ansprüche 12 bis 14, **dadurch gekennzeichnet, dass** sie von einer pneumatischen Verteilmaschine gebildet ist und eine Mehrzahl an einem jeweiligen Dosierradsegment (103) der Dosierwalze (101) des Dosierorgans (101) nachgeordneten Übergabekammern (38, 39, 40) aufweist, welche einerseits mit wenigstens einem Gebläse (28, 29) in Verbindung stehen und welche andererseits in je eine Förderleitung (37) münden, um das von einem jeweiligen Dosierradsegment (103) der Dosierwalze (101) dosierte Verteilgut pneumatisch an Verteilorgane zu überführen, welche mit unterschiedlichem seitlichen Abstand von der Längsachse der Verteilmaschine angeordnet sind, wobei die pneumatische Verteilmaschine insbesondere mehrere Dosierorgane (100) mit je einer in je einem Dosiergehäuse (102) gelagerten, rotierbar angetriebenen Dosierwalze (101) und einer Mehrzahl an einem jeweiligen Dosierorgan (100) nachgeordneten Übergabekammern (38, 39, 40) umfasst, welche einerseits mit wenigstens einem Gebläse (28, 29) in Verbindung stehen und welche andererseits in je eine Förderleitung (37) münden, um das von der Dosierwalze (101) eines jeweiligen Dosierorgans (100) dosierte Verteilgut pneumatisch an Verteilorgane zu überführen, wobei die Dosierwalze (101) eines jeweiligen Dosierorgans (100) eine der Anzahl an Übergabekammern (38, 39, 40) entsprechende Anzahl an Dosierradsegmenten (103) aufweist, welche unabhängig voneinander rotierbar angetrieben sind.

## Claims

1. A metering element (100) having a rotatably driven metering roller (101) which is mounted in a metering housing (102) and which is suitable for use in an agricultural machine for dispensing material to be distributed, wherein the metering roller (101) has a plurality of metering wheel segments (103) which are mounted on a hollow body (105) extending coaxially to the rotational axis thereof and to each metering wheel segment (103) of the metering roller (101) is assigned a separate drive (104) in order to drive the metering wheel segments (103) independently of each other, wherein the drives (104) of the metering wheel segments (103) of the metering roller (101) are arranged in the interior of the metering wheel segments (103), wherein the drives (104) of the metering wheel segments (103) of the metering roller (101) are fixed in the interior of the hollow body (105) bearing the metering wheel segments (103) and in each case have a gearwheel (113) which is assigned to one respective metering wheel segment (103), the outer surface of the hollow body (105) has a through-opening (111) at least on its axial portion which is assigned to one respective gearwheel (113) and one respective gearwheel (113) is in engagement with one respective internal toothing (112) of one respective metering wheel segment (103).

2. The metering element as claimed in claim 1, **characterized in that** the drives (104) of the metering roller (101) of the metering element (100) comprise electric or hydraulic motors.

3. The metering element as claimed in claim 1 or 2, **characterized in that** the metering roller (101) of the metering element (100) has at least three metering wheel segments (103) driven independently of one another.

4. The metering element as claimed in claim 1 to 3, **characterized in that** the metering wheel segments (103) of the metering roller (100) are mounted by means of plain (108) and/or rolling bearings on the hollow body (105) which extends coaxially to the rotational axis thereof.

5. The metering element as claimed in one of claims 1 to 4, **characterized in that** the metering wheel segments (103) of the metering roller (101) are sealed relative to one another on their front faces which face one another by means of slip-ring seals (110), in particular in the form of labyrinth seals.

6. The metering element as claimed in one of claims 1 to 5, **characterized in that** the metering wheel segments (103) of the metering roller (101) are replaceably mounted on the hollow body (105), wherein the metering wheel segments (103), in particular,
- may be pushed onto the hollow body (105) in the axial direction; and/or
- are of multi-part configuration in the form of substantially circular-arc-shaped metering wheel segment portions (103) which may be releasably fastened to one another.

7. The metering element as claimed in one of claims 1 to 6, **characterized in that** the drives (104) of the metering wheel segments (103) of the metering roller (101) are accommodated in a housing and/or are flooded with an inert liquid, in particular oil.

8. The metering element as claimed in one of claims 1 to 7, **characterized in that** a position detection sensor, in particular in the form of a rotational speed sensor, is assigned to each metering wheel segment (103) of the metering roller (101).

9. The metering element as claimed in one of claims 1 to 8, **characterized in that** a separate control module is assigned to
- one respective drive (104) of one respective metering wheel segment (103) and/or
- groups of drives (104) of a plurality of metering wheel segments (103),
said control module in particular being connected to a control and/or regulating device of the distribution machine.

10. The metering element as claimed in one of claims 1 to 9, **characterized in that** a plurality of guide plates (53) is assigned to the metering roller (101), said guide plates being arranged spaced apart from one another corresponding to the axial length of one respective metering wheel segment (103) and in each case extending between two adjacent metering wheel segments (103) directly onto the outer surface of the metering roller (101).

11. The metering element as claimed in one of claims 1 to 10, **characterized in that** the metering element (100) comprises two rotatably driven metering rollers (101) which are mounted in one or in one respective metering housing (102) for metering different materials to be distributed, wherein the metering rollers (101) of the metering element (100) in each case have a plurality of metering wheel segments (103) which, in particular, correspond to one another and which are rotatably driven independently of one another, wherein the materials to be distributed which are metered by one respective metering wheel segment (103) of both metering rollers (101) in each case may be dispensed together.

12. An agricultural machine for dispensing material to be distributed, in particular fertilizer and/or seed, which agricultural machine comprises at least one metering element (100) as claimed in claim 1.

13. The agricultural machine as claimed in claim 12, **characterized in that** the at least one metering element (100) comprises the characterizing features of at least one of claims 2 to 11.

14. The agricultural machine as claimed in claim 12 or 13, **characterized in that** a distribution element, in particular from the group including:
- deposit openings for depositing the material to be distributed on the surface of the soil;
- deflector plates (61) for the transverse distribution of the material to be distributed over a partial width of the entire working width;
- injection devices for introducing the material to be distributed into the soil; and
- seed coulters or seeding tines,
is assigned to one respective metering wheel segment (103) of the metering roller (101) of the metering element (100).

15. The agricultural machine as claimed in one of claims 12 to 14, **characterized in that** it is arranged in the form of a pneumatic distribution machine and has a plurality of transfer chambers (38, 39, 40) which are arranged downstream of one respective metering wheel segment (103) of the metering roller (101) of the metering element (101) and which, on the one hand, are connected to at least one fan (28, 29) and which, on the other hand, feed into one respective conveying line (37) in order to transfer the material to be distributed, which is metered by one respective metering wheel segment (103) of the metering roller (101), pneumatically to distribution elements which are arranged at a variable lateral spacing from the longitudinal axis of the distribution machine, wherein the pneumatic distribution machine comprises, in particular, a plurality of metering elements (100) with one respective rotatably driven metering roller (101) which is mounted in one respective metering housing (102) and a plurality of transfer chambers (38, 39, 40) which are arranged downstream of one respective metering element (100) and which, on the one hand, are connected to at least one fan (28, 29) and which, on the other hand, feed into one respective conveying line (37) in order to transfer the material to be distributed, which is metered by the metering roller (101) of one respective metering element (100), pneumatically to distribution elements, wherein the metering roller (101) of one respective metering element (100) has a number of metering wheel segments (103) which corresponds to the number of transfer chambers (38, 39, 40), said metering wheel segments being rotatably driven independently of each other.

## Revendications

1. Organe de dosage (100) avec un rouleau de dosage (101) disposé dans un carter de dosage (102) et pouvant être entraîné en rotation, ledit organe étant adapté pour une utilisation dans une machine agricole pour évacuer un produit à épandre, le rouleau de dosage (101) comportant une pluralité de segments de roue de dosage (103) disposés sur un corps creux (105) s'étendant dans le plan coaxial par rapport à son axe de rotation et un entraînement (104) propre étant associé à un segment de roue de dosage (103) respectif du rouleau de dosage (101) pour entraîner les segments de roue de dosage (103) indépendamment les uns des autres, les entraînements (104) des segments de roue de dosage (103) du rouleau de dosage (101) étant disposés à l'intérieur des segments de roue de dosage (103), les entraînements (104) des segments de roue de dosage (103) du rouleau de dosage (101) étant fixés à l'intérieur du corps creux (105) logeant les segments de roue de dosage (103) et comportant respectivement une roue dentée (113) associée à un segment de roue de dosage (103) respectif, la surface d'enveloppe du corps creux (105) comportant au moins une ouverture traversante (111) au niveau de sa section axiale associée à une roue dentée (113) respective et une roue dentée (113) respective étant en prise avec un endentement intérieur (112) respectif d'un segment de roue de dosage (103) respectif.

2. Organe de dosage selon la revendication 1, **caractérisé en ce que** les entraînements (104) du rouleau de dosage (101) de l'organe de dosage (100) comprennent les moteurs électriques ou hydrauliques.

3. Organe de dosage selon la revendication 1 ou 2, **caractérisé en ce que** le rouleau de dosage (101) de l'organe de dosage (100) comporte au moins trois segments de roue de dosage (103) entraînés indépendamment les uns des autres.

4. Organe de dosage selon l'une quelconque des revendications 1 à 3, **caractérisé en ce que** les segments de roue de dosage (103) du rouleau de dosage (100) sont disposés sur le corps creux (105) s'étendant dans le plan coaxial par rapport à son axe de rotation à l'aide de paliers glissants (108) et/ou de roulement.

5. Organe de dosage selon l'une quelconque des revendications 1 à 4, **caractérisé en ce que** les segments de roue de dosage (103) du rouleau de dosage (101) sont étanchéifiés les uns par rapport aux autres au niveau de leurs côtés avant orientés les uns vers les autres à l'aide de joints à bague de glissement (110), notamment sous la forme de joints en labyrinthe.

6. Organe de dosage selon l'une quelconque des revendications 1 à 5, **caractérisé en ce que** les segments de roue de dosage (103) du rouleau de dosage (101) sont disposés de façon amovible sur le corps creux (105), les segments de roue de dosage (103) étant notamment :
- emmanchables dans la direction axiale sur le corps creux (105) ; et/ou
- réalisés en plusieurs parties sous la forme de sections de segment de roue de dosage (103) pouvant être fixées de façon amovible les unes aux autres et pour l'essentiel pour l'essentiel d'arc de cercle.

7. Organe de dosage selon l'une quelconque des revendications 1 à 6, **caractérisé en ce que** les entraînements (104) des segments de roue de dosage (103) du rouleau de dosage (101) sont logés dans un carter et/ou noyés à l'aide d'un fluide inerte, notamment de l'huile.

8. Organe de dosage selon l'une quelconque des revendications 1 à 7, **caractérisé en ce qu'**un capteur de détection de position, notamment sous la forme d'un capteur de vitesse de rotation, est associé à chaque segment de roue de dosage (103) du rouleau de dosage (101).

9. Organe de dosage selon l'une quelconque des revendications 1 à 8, **caractérisé en ce qu'**un module de commande propre est associé :
- à un entraînement (104) respectif d'un segment de roue de dosage (103) respectif et/ou
- des groupes d'entraînements (104) de plusieurs segments de roue de dosage (103) ;
ledit module de commande étant notamment relié à un dispositif de commande et/ou de réglage de la machine d'épandage.

10. Organe de dosage selon l'une quelconque des revendications 1 à 9, **caractérisé en ce qu'**une pluralité de tôles conductrices (53) sont associées au rouleau de dosage (101), lesdites tôles étant disposées les unes par rapport aux autres à une distance correspondant à la longueur axiale d'un segment de roue de dosage (103) respectif et s'étendant entre respectivement deux segments de roue de dosage (103) connexes jusqu'à buter directement contre la surface d'enveloppe du rouleau de dosage (101).

11. Organe de dosage selon l'une quelconque des revendications 1 à 10, **caractérisé en ce que** l'organe de dosage (100) comprend deux rouleaux de dosage (101) disposés dans un ou dans respectivement un carter de dosage (102) et pouvant être entraînés en rotation afin de doser différents produits d'épandage, les rouleaux de dosage (101) de l'organe de dosage (100) comportant respectivement une pluralité de segments de roue de dosage (103) se correspondant notamment les uns aux autres et pouvant être entraînés en rotation indépendamment les uns des autres, les produits d'épandage dosés par respectivement un segment de roue de dosage (103) des deux rouleaux de dosage (101) pouvant respectivement être évacués ensemble.

12. Machine agricole pour évacuer du produit à épandre, notamment de l'engrais et/ou des semences, avec au moins un organe de dosage (100) selon la revendication 1.

13. Machine agricole selon la revendication 12, **caractérisée en ce que** l'au moins un organe de dosage présente les caractéristiques caractérisantes d'au moins une des revendications 2 à 11.

14. Machine agricole selon la revendication 12 ou 13, **caractérisée en ce qu'**un organe d'épandage, notamment appartenant au groupe :
- des ouvertures de dépôt pour le dépôt à plat du produit à épandre sur le sol ;
- des plateaux de percussion (61) pour l'épandage transversal du produit à épandre sur une largeur partielle de la largeur de travail totale ;
- des dispositifs d'injection pour amener le produit à épandre dans le sol ; et
- des socs pour semis ou des dents de semis ;
est associé à un segment de roue de dosage (103) respectif du rouleau de dosage (101) de l'organe de dosage (100).

15. Machine agricole selon l'une quelconque des revendications 12 à 14, **caractérisée en ce qu'**elle est constituée d'une machine d'épandage pneumatique et comporte une pluralité de compartiments de transfert (38, 39, 40) placés en aval d'un segment de roue de dosage (103) respectif du rouleau de dosage (101) de l'organe de dosage (101), lesdits compartiments étant reliés d'une part à au moins une soufflerie (28, 29) et débouchant d'autre part respectivement dans une conduite de transport (37) pour transférer de façon pneumatique le produit à épandre dosé d'un segment de roue de dosage (103) respectif du rouleau de dosage (101) aux organes d'épandage disposés à une distance latérale différente de l'axe longitudinal de la machine d'épandage, la machine d'épandage pneumatique comprenant notamment plusieurs organes de dosage (100) avec respectivement un rouleau de dosage (101) disposé respectivement dans un carter de dosage (102) et pouvant être entraîné en rotation et avec une pluralité de compartiments de transfert (38, 39, 40) placés en aval d'un organe de dosage (100) respectif, lesdits compartiments étant reliées d'une part à au moins une soufflerie (28, 29) et débouchant d'autre part dans respectivement une conduite de transport (37) pour transférer de façon pneumatique le produit à épandre dosé par le rouleau de dosage (101) d'un organe de dosage (100) respectif aux organes d'épandage, le rouleau de dosage (101) d'un organe de dosage (100) respectif comportant un nombre de compartiments de transfert (38, 39, 40) correspondant au nombre de segments de roue de dosage (103) entraînés en rotation indépendamment les uns des autres.
